# EUROPEAN PATENT SPECIFICATION

(11) **EP 1 973 250 B1**
(45) Date of publication and mention of the grant of the patent: **04.05.2011**
(21) Application number: 07251258.5
(22) Date of filing: 23.03.2007
(51) Int. Cl.: H04J 3/16

(54) **Method and apparatus for transporting client signals over transparent networks using virtual concatenation**
Verfahren und Vorrichtung für den Transport von Client-Signalen über transparente Netzwerke mittels virtueller Verknüpfung
Procédé et appareil de transport de signaux de clients sur des réseaux transparents en utilisant une concaténation virtuelle

(43) Date of publication of application: 24.09.2008
(73) Proprietor: Alcatel-Lucent USA Inc., New Jersey 07974 (US)
(72) Inventor: Gunreben, Uwe, 90482 Nuremberg (DE); Molina, Angel, 91054 Erlangen (DE)
(74) Representative: Cockayne, Gillian

(56) References cited:
- US-A1- 2004 252 633

## Description

### FIELD OF THE INVENTION

The invention relates to the field of communication networks and, more specifically, to transporting client signals over transport network using virtual concatenation.

### BACKGROUND OF THE INVENTION

The basic function of transport networks is transparent transport of client signals. A client signal may be transported within a transport network using transport containers. If the size (i.e., bit rate) of a client signal does not match the size of transport containers of the transport network, direct mapping of one client signal into one transport container is not a bandwidth-efficient solution. A typical solution is inverse multiplexing. At the ingress point of the transport network, a client signal is divided into multiple sub-signals where each sub-signal has a size close to the size of the transport container and is mapped into one transport container. At the egress point of the transport network, the sub-signals are extracted from the transport containers and the client signal is reconstructed from the sub-signals. The bandwidth efficiency is achieved by using sub-signals as close as possible in size to the transport containers, thereby minimizing unused bandwidth in the transport network.

For common transport networks (i.e., Synchronous Optical Networks (SONETs), Synchronous Digital Hierarchy (SDH) networks, Optical Transport Networks (OTNs), and the like), an inverse multiplexing scheme known as virtual concatenation (VCAT) is used to transport client signals across the transport network in a bandwidth-efficient manner. The VCAT scheme is standardized by the International Telecommunications Union - Telecommunications (ITU-T). In VCAT, for each client signal to be transported across the transport network, the number of transport containers to be used to transport the client signal across the transport network is specified, and the client signal is divided into sub-signals by byte-stripping across the transport containers available for that client signal. In VCAT, the set of transport containers used to transport a client signal is a virtual concatenation group (VCG), which is composed of multiple VCG members (i.e., transport containers).

The primary applications of VCAT include transport of constant bit rate (CBR) client signals and variable bit rate (VBR) client signals. For CBR client signals, a VCG is established with a fixed number and size of VCG members such that available bandwidth of the VCG closely matches the bandwidth of the CBR client signal, and excess bandwidth is unused. If a VCG member fails the entire VCG fails because the remaining bandwidth is insufficient to transport the CBR client signal. For VBR client signals, a VCG is established with a fixed number and size of VCG members. If one or more of the VCG members fail, it is possible to use the remaining VCG members to transport the VBR client signal by offering less bandwidth to the VBR client signal. For VBR client signals, the link capacity adjustment scheme (LCAS) algorithm ensures that, at any point in time, the source and sink of the VCG are in agreement as to which VCG members are active, and to ensure that the maximum number of VCG members are active at all times.

Disadvantageously, while VCAT/LCAS can be applied as a resilience mechanism for VBR client signals, VCAT/LCAS cannot be applied as a resilience mechanism for CBR client signals (because VCAT/LCAS-based VCGs would provide variable-rate transport channels to CBR client signals expecting constant-rate transport channels). Rather, the only method currently available to achieve resilience for CBR client signals within transport networks is to establish end-to-end protection on a per VCG member basis. For example, for SDH/SONET transport networks, the most commonly available option for end-to-end protection is UPSR/SNCP 1+1 protection in which each VCG member is duplicated and routed over two disjoint routes from source to destination. The available end-to-end protection approaches are quite costly, both in terms of bandwidth consumption (i.e., capital cost) and maintenance efforts to manage such protection groups (i.e., operations cost).

Furthermore, existing transport network equipment is often configured such that available bandwidth remains unused. In existing SONET/SDH transport network elements, transmission bandwidth is dimensioned between slots according to the SONET/SDH mapping hierarchy (i.e., bandwidth usable by circuit packs to exchange transport channels is usually equivalent to the bandwidth of one of the SONET/SDH signals). For example, an STM-64 can transport 64 VC-4 transport containers so that, in order to build a circuit pack for transporting STM-16 client signals transparently, a function would be required to map STM-16 client signals into a VCG with 17 VC-4 transport containers. Since bandwidth between slots is 64x VC-4, three such mapping functions may be placed on such a circuit pack. Disadvantageously, however, such a circuit pack configuration leaves 13x VC-4 bandwidth (i.e., 64 - (17x3)) between slots unused, thereby resulting in inefficient use of switch capacity.

US 2004/252633 A1 discloses fast restoration for virtually concatenated data traffic. As disclosed in this document, a virtual concatenation group is formed having a plurality of primary members and at least one backup member, where, responsive to the failure of a primary member, a backup member is utilized for restoring at least a portion of the traffic on the failed primary member.

### SUMMARY OF THE INVENTION

Various deficiencies in the prior art are addressed through the invention of a method and apparatus according to claims 1, 3 and 4.

### BRIEF DESCRIPTION OF THE DRAWINGS

The teachings of the present invention can be readily understood by considering the following detailed description in conjunction with the accompanying drawings, in which:
FIG. 1 depicts a high-level block diagram of a generic functional model for virtual concatenation transport;
FIG. 2 depicts a high-level block diagram of a transport network, illustrating parameters and values associated with the enhanced VCAT/LCAS functions of the present invention;
FIG. 3 depicts a source element state machine and a sink element state machine for a VCG member of a VCG provisioned according to the enhanced VCAT/LCAS functions of the present invention;
FIG. 4 depicts a method according to one embodiment of the present invention; and
FIG. 5 depicts a high-level block diagram of a general-purpose computer suitable for use in performing the functions described herein.

To facilitate understanding, identical reference numerals have been used, where possible, to designate identical elements that are common to the figures.

### DETAILED DESCRIPTION OF THE INVENTION

The present invention provides dynamic protection of constant bit rate client signals in transport networks using enhanced virtual concatenation and enhanced link capacity adjustment scheme techniques, thereby enabling constant bit rate client signals to be transported over transport networks with increased reliability. By converting a virtual concatenation group (VCG) signal into a plurality of VCG member signals having an aggregate bandwidth greater than the bandwidth of the VCG signal, the present invention obviates the need for 1 +1 protection of VCG member signals in order to adequately protect a constant bit rate client signal transported by the associated VCG signal. Thus, the present invention provides improved bandwidth efficiency over existing solutions using 1 +1 protection of VCG member signals.

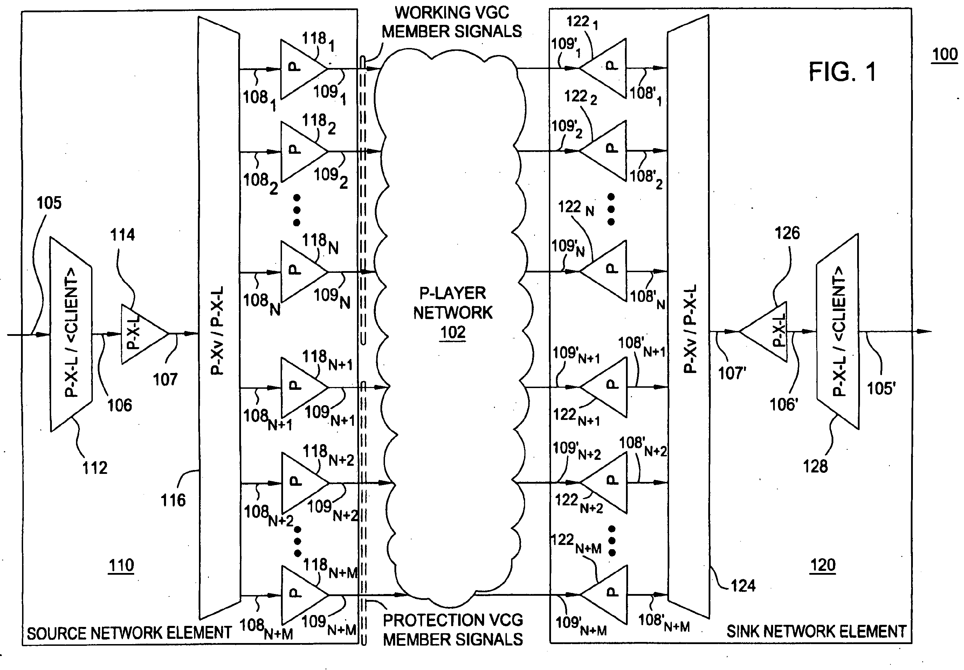

FIG. 1 depicts a high-level block diagram of a communication network. The communication network 100 is depicted and described within the context of a generic functional model for transport networks (as specified in ITU-T Standards G.806, as well as related ITU-T Standards such as ITU-T G.783 (Characteristics of SDH Equipment Functional Blocks), ITU-T G.798 (Characteristics of OTN Equipment Functional Blocks), and the like, each of which is incorporated by reference herein). More specifically, communication network 100 is depicted and described within the context of a generic functional model for VCAT-based transport networks utilizing LCAS functionality. In such functional models, trapezoidal shapes represent adaptation functions which convert between signal types (among other processing) and triangular shapes represent termination functions which monitor signals (among other processing).

As depicted in FIG. 1, communication network 100 includes a source network element 110, a P-layer network 102, and a sink network element 120. The P-layer network may be any path-layer network (e.g., STS-N in SONET, VC-N in SDH, ODUk in OTN, and the like, depending on the underling transport technology). The source network element 110 initiates virtual concatenation of client signals. The source network element 110 maps a client signal into a VCG signal, decomposes the VCG signal into VCG member signals, and transmits the VCG member signals to sink network element 120 over P-layer network 102. The sink network element 120 terminates virtual concatenation of client signals. The sink network element 120 receives VCG member signals from source network element 110 over P-layer network 102, reconstructs the VCG signal from the VCG member signals, and extracts the client signal from the VCG signal. The source network element 110 and sink network element 120 include enhanced VCAT and LCAS capabilities.

As depicted in FIG. 1, source network element 110 includes a P-X-L/<client> adaptation source function 112, a P-X-L termination source function 114, a P-Xv/P-X-L adaptation source function 116, and a plurality of P termination source functions 118₁ - 118_{N} and 118_{N+1} - 118_{N+M} (collectively, P termination source functions 118). Although primarily depicted and described with respect to ITU-T Standard G.806 (describing generic transport equipment), source network element 110 may be implemented in accordance with one or more other technology-specific standards (e.g., ITU-T Standards such as ITU-T G.783 (for SDH), ITU-T G.798 (for OTN), and the like, depending on the underlying transport technology). Although omitted for purposes of clarity, source network element 110 may include various processors, memory, circuits, and other components which cooperate to provide the various functions described herein with respect to source network element 110.

The P-X-L/<client> adaptation source function 112 receives a client signal 105. The P-X-L/<client> adaptation source function 112 may receive client signal 105 from network equipment or a user device. The client signal may be a constant bit rate (CBR) client signal (e.g., STS-N in SONET, STM-N in SDH, ODUk in OTN, and the like). The P-X-L/<client> adaptation source function 112 maps received client signal 105 into a VCG signal 106. The P-X-L/<client> adaptation source function 112 provides VCG signal 106 to P-X-L termination source function 114. The P-X-L termination source function 114 is intended to add any necessary overhead information in order to monitor VCG signal 106 (among other processing unrelated to performance monitoring). The P-X-L termination source function 114 provides VCG signal 107 (i.e., a modified version of VCG signal 106) to P-Xv/P-X-L adaptation source function 116.

The P-Xv/P-X-L adaptation source function 116 receives VCG signal 107 from P-X-L termination source function 114. The P-Xv/P-X-L adaptation source function 116 provisions additional bandwidth for VCG signal 107 (i.e., provisioning bandwidth for VCG signal 107 in excess of the bandwidth required to transport client signal 105). The P-Xv/P-X-L adaptation source function 116 decomposes VCG signal 107 into a set of VCG member signals including VCG member signals 108₁ - 108_{N} and VCG member signals 108_{N+1} - 108_{N+M} (collectively, VCG member signals 108) associated with VCG signal 107. The aggregate bandwidth of the VCG member signals is greater than the bandwidth of the VCG signal.

The VCG member signals 108₁-108_{N} comprise active VCG member signals which (at least initially) transport client signal 105 (and, thus, are denoted herein as working VCG member signals 108₁ - 108_{N}). The VCG member signals 108₁ - 108_{N} correspond to the bandwidth initially provisioned for VCG signal 107. The VCG member signals 108_{N+1} - 108_{N+M} comprise active VCG member signals which (at least initially) do not transport client signal 105; rather, VCG member signals 108_{N+1} - 108_{N+M} are available to protect working VCG member signals 108₁ - 108_{N} (and, thus, although active, are denoted herein as protection VCG member signals 108_{N+1} - 108_{N+M}). The VCG member signals 108_{N+1} - 108_{N+M} correspond to the additional bandwidth provisioned for VCG signal 107.

The P-Xv/P-X-L adaptation source function 116 provides working VCG member signals 108₁ - 108_{N} to P termination source functions 118₁ - 118_{N}, respectively. The P-Xv/P-X-L adaptation source function 116 provides protection VCG member signals 108_{N+1} - 108_{N+M} to P termination source functions 118_{N+1} - 118_{N+M}, respectively. The P termination source functions 118₁ - 118_{N} and 118_{N+1} - 118_{N+M} (collectively, P termination source functions 118) are intended to add any necessary overhead information in order to monitor VCG member signals 108. The P termination source functions 118₁ - 118_{N} and 118_{N+1} - 118_{N+M} transmit VCG member signals 109₁ - 109_{N} and 109_{N+1} - 109_{N+M} (i.e., modified versions of respective VCG member signals 108₁ -108_{N} and 108_{N+1} - 108_{N+M}) to sink network element 120 using P-layer network 102.

As depicted in FIG. 1, sink network element 120 includes a plurality of P termination sink functions 122₁ - 122_{N} and 122_{N+1} - 122_{N+M} (collectively, P termination sink functions 122), a P-Xv/P-X-L adaptation sink function 124, a P-X-L termination sink function 126, and a P-X-L/<client> adaptation sink function 128. Although primarily depicted and described with respect to ITU-T Standard G.806 (describing generic transport equipment), sink network element 120 may be implemented in accordance with one or more other technology-specific standards (e.g., ITU-T Standards such as ITU-T G.783 (for SDH), ITU-T G.798 (for OTN), and the like, depending on the underlying transport technology). Although omitted for purposes of clarity, sink network element 120 may include various processors, memory, circuits, and other components which cooperate to provide the various functions described herein with respect to sink network element 120.

The P termination sink functions 122₁ - 122_{N} and 122_{N+}, - 122_{N+M} receive working VCG member signals 109'₁ - 109'_{N} and 109'_{N+1} - 109'_{N+M}, respectively, from source network element 110 using P-layer network 102. The P termination sink functions 122 are intended to monitor respective VCG member signals 109'. The P termination sink functions 122 provide VCG member signals 108'₁ - 108'_{N} and 108'_{N+1} - 108'_{N+M} (i.e., modified versions of respective VCG member signals 109'₁ - 109'_{N} and 109'_{N+1} - 109'_{N+M}) to P-Xv/P-X-L adaptation sink function 124.

The P-Xv/P-X-L adaptation sink function 124 receives VCG member signals 108'₁ - 108'_{N} and 108'_{N-1} - 108'_{N+M} from P termination sink functions 122₁ - 122_{N} and 122_{N+1} - 122_{N+M}, respectively. The P-Xv/P-X-L adaptation sink function 124 reconstructs VCG signal 107' from VCG member signals 108' of VCG signal 107'. The P-Xv/P-X-L adaptation sink function 124 reconstructs VCG signal 107' from ones of the VCG member signals 108' transporting client signal 105 (denoted herein as client-signal-carrying VCG members since, at any given time, any combination of working VCG member signals 108'₁ - 108'_{N} and protection VCG member signals 108' _{N+1} - 108'_{N+M} may be transporting client signal 105).

The P-Xv/P-X-L adaptation sink function 124 reconstructs VCG signal 107' from working VCG member signals 108', - 108'_{N} as long as none of the working VCG member signals 108'₁ - 108'_{N} fails. The P-Xv/P-X-L adaptation sink function 124 reconstructs VCG signal 107' from a combination of working VCG member signals 108'₁ - 108'_{N} and protection VCG member signals 108'_{N+1} -108'_{N+M} when one or more of the working VCG member signals 108'₁ - 108'_{N} has failed. The P-Xv/P-X-L adaptation sink function 124 provides reconstructed VCG signal 107' to P-X-L termination sink function 126.

The P-X-L termination sink function 126 receives reconstructed VCG signal 107' from P-Xv/P-X-L adaptation sink function 124. The P-X-L termination sink function 126 is intended to monitor reconstructed VCG signal 107'. The P-X-L termination sink function 126 provides VCG signal 106' (i.e., a modified version of VCG signal 107') to P-X-L/<client> adaptation sink function 128. The P-X-L/<client> adaptation sink function 128 extracts client signal 105' from VCG signal 106'. The P-X-L/<client> adaptation sink function 128 transmits extracted client signal 105'. The P-X-L/<client> adaptation sink function 128 may transmit extracted client signal 105' to network equipment or a user device.

As depicted and described herein with respect to FIG. 1, client signal 105, VCG signal 106, VCG signal 107, VCG member signals 108, and VCG member signals 109 at source network element 110 correspond to client signal 105', VCG signal 106', VCG signal 107', VCG member signals 108', and VCG member signals 109' at sink network element 120, respectively. The "primed" numbers used to identify the signals at the sink network element 120 are intended to reflect that, due to transmission errors (since generally there will be some transmission errors), signals at sink network element 120 are not exactly the same as the corresponding signals at source network element 110.

Although omitted for purposes of clarity, in one embodiment, client signal 105 may be a mapped CBR client signal. In one such embodiment, a CBR client signal x may be mapped into a CBR client signal y, and CBR client signal y would be processed using the enhanced VCAT/LCAS functions of the present invention. The CBR client signal x may be mapped into CBR client signal y by a port unit which receives CBR client signal x. For example, a port unit may receive an STM-16 client signal and map the received STM-16 client signal into an ODU1 signal such that the STM-16 client signal is transported transparently. In this example, the ODU1 signal corresponds to client signal 105 processed using the enhanced VCAT/LCAS functions of the present invention.

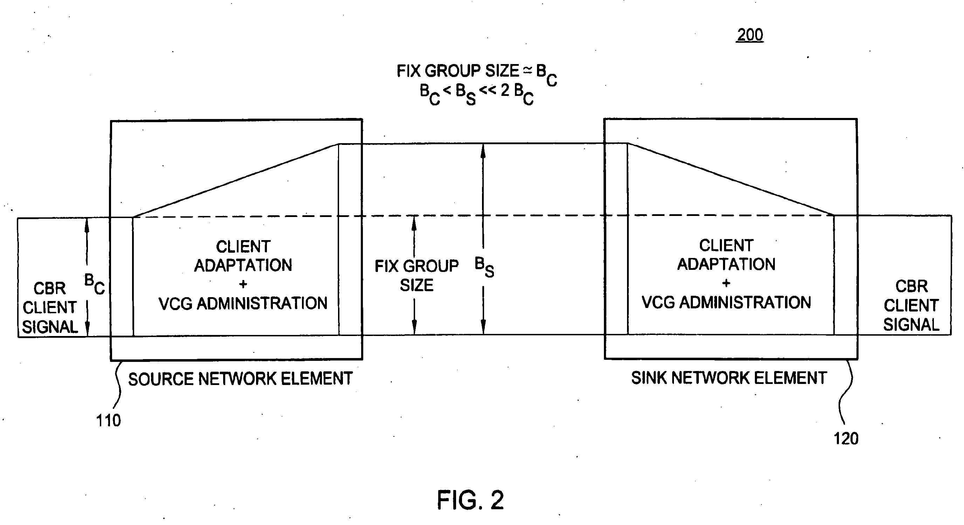

As described herein, source network element 110 and sink network element 120 include enhanced VCG signal administration functions. At the source end of the transport network, source network element 110 provisions a VCG signal for a CBR client signal and decomposes the VCG signal into VCG member signals (illustratively, VCG member signals 108 formed by P-Xv/P-X-L adaptation source function 116) such that the total bandwidth of the VCG member signals exceeds the bandwidth of the VCG signal (and, therefore, the client signal), providing protection bandwidth which may be employed to transport the CBR client signal if portions of the working bandwidth fail. At the sink end of the transport network, sink network element 120 reconstructs the VCG signal from client-signal-carrying portions of the bandwidth (including working bandwidth, and, if part of the working bandwidth has failed, protection bandwidth), and recovers the client signal from the reconstructed VCG signal. The enhanced VCG signal administration functions of the present invention may be better understood with respect to FIG. 2.

The P-Xv/P-X-L adaptation source function 116 is adapted to provide protection for client signal 105 using protection VCG member signals 108_{N+1} - 108_{N+M}. The P-Xv/P-X-L adaptation source function 116, in response to a failure of one or more of the working VCG member signals 108₁ - 108_{N}, remaps the corresponding portion of client signal 105 (the portion previously conveyed by the failed one(s) of the working VCG member signals 108₁ - 108_{N}) to one or more of the protection VCG member signals 108_{N+1} - 108_{N+M} (assuming that there are enough protection VCG member signals available to support the failed ones of the working VCG member signals). This enables constant-rate service to continue to be provided to client signal 105 despite the failure of some of working VCG member signals 108₁ - 108_{N}.

The P-Xv/P-X-L adaptation sink function 124 is adapted to provide protection for client signal 105 using protection VCG member signals 108' _{N+1} - 108'_{N+M}. The P-Xv/P-X-L adaptation sink function 124, in response to a failure of one or more of the working VCG member signals 108'₁ - 108'_{N}, reconstructs the VCG signal 107' using a combination of a portion of the working VCG member signals 108'₁ -108'_{N} (i.e., working VCG member signals which have not failed) and one or more of the protection VCG member signals 108'_{N+1} - 108'_{N+M} (which began transporting a portion of client signal 105 in response to the failure of one or more of the working VCG member signals 108'₁ - 108'_{N}). This enables constant-rate service to continue to be provided to client signal 105 despite failure of some of working VCG member signals 108'₁ - 108'_{N}.

The failure of working VCG member signals that triggers remapping of client signal 105 from working VCG member signals to protection VCG member signals may be: (1) detected by source network element 110, or (2) detected by sink network element 120 and communicated to source network element 110. In one embodiment, sink network element 120 communicates an indication of a failed working VCG member signal to source network element 110 using an LCAS return channel. In one such embodiment, MSP bits in the LCAS return channel may be used to communicate failure of a working VCG member signal; however, the present invention is not limited to such implementations.

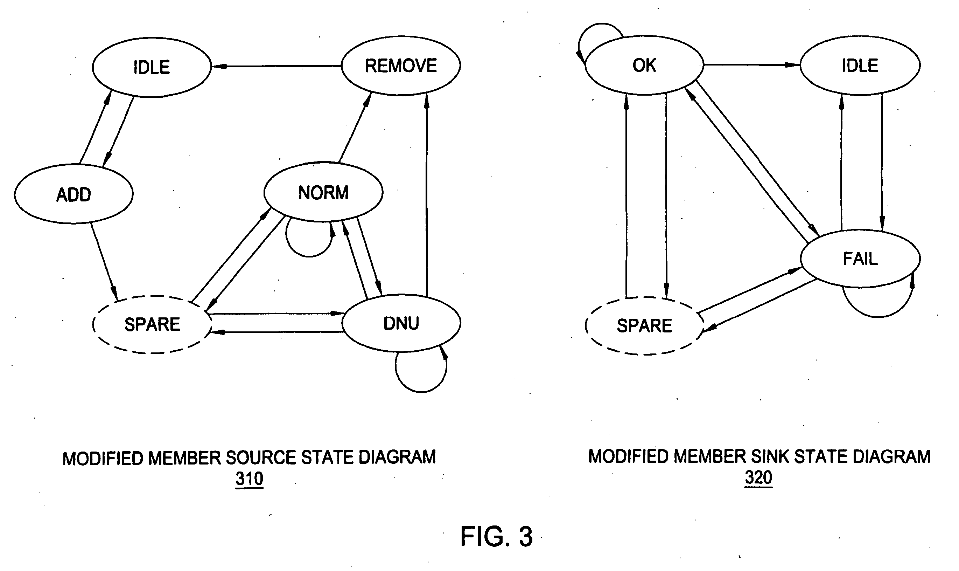

The failure of working VCG member signals that triggers remapping of client signal 105 from working VCG member signals 108₁ - 108_{N} to protection VCG member signals 108_{N+1} - 108_{N+M} is managed using state machines. In one embodiment, the switching (remapping) of portions of client signal 105 from working VCG member signals 108₁ - 108_{N} to protection VCG member signals 108_{N+1} - 108_{N+M} is performed using a pair of state machines maintained for each VCG member signal 108. The pair of state machines maintained for each VCG member signal includes a source element state machine and a sink element state machine. The source element state machine and sink element state machine for a VCG member signal are depicted and described herein with respect to FIG. 3.

The source network element adaptation functions and termination functions and sink network element adaptation functions and termination functions depicted and described with respect to FIG. 1 are independent of the underlying transport network technology (i.e., the underlying transport network technology may be any transport network technology, such as SONET, SDH, PDH, OTN, and the like, as well as various combinations thereof). Although primarily depicted and described with respect to standards such as ITU-T G.806 (Generic Functional Model for Transport Networks), ITU-T G.783 (Characteristics of SDH Equipment Functional Blocks), ITU-T G.798 (Characteristics of OTN Equipment Functional Blocks), and the like, comparable adaptation functions and termination functions compliant with various other standards or combination of standards may be used for providing enhanced VCAT and LCAS functions of the present invention.

FIG. 2 depicts a high-level block diagram of a transport network, illustrating parameters and values associated with the enhanced VCAT/LCAS functions of the present invention. As depicted in FIG. 2, source network element 110 receives a CBR client signal. The CBR client signal has an associated bandwidth (denoted as B_{c}). The bandwidth of the CBR client signal must be available in the transport network in order to support the CBR client signal (i.e., otherwise the entire CBR client signal fails). The source network element 110 supports a new VCG parameter (denoted as "fix group size") associated with each VCG signal. The "fix group size" of a VCG signal is the amount of bandwidth required to be provisioned for that VCG signal in order to provide constant-rate service to the CBR client signal transported by that VCG signal.

The source network element 110 provisions a VCG signal for the CBR client signal such that "fix group size" = B_{c} (or slightly more bandwidth depending on the number of VCG member signals required to support the CBR client signal). The source network element 110 provisions a set of VCG member signals having an aggregate bandwidth (denoted as Bₛ) that is greater than the "fix group size" (Bₛ > "fix group size"). In other words, the aggregate bandwidth of the set of VCG member signals (Bₛ) includes active bandwidth available to transport the CBR client signal (denoted as working bandwidth), as well as additional active bandwidth available to transport portions of the CBR client signal in the event that a portion of the working bandwidth fails (denoted as protection bandwidth). The protection bandwidth protects the working bandwidth with improved bandwidth efficiency over existing solutions (i.e., B_{c} < Bₛ << 2 x B_{c} for the present invention; whereas in existing solutions Bₛ = 2B_{c}).

The source network element 110 provides the bandwidth of the VCG signal using VCG member signals (as depicted and described with respect to FIG. 1). The source network element 110 decomposes the VCG signal into VCG member signals including working VCG member signals and protection VCG member signals. The working VCG member signals include sufficient VCG member signals to support the "fix group size" (i.e., source network element 110 provisions sufficient working VCG member signals to support the CBR client signal). The protection VCG member signals include one or more additional VCG member signals which are available to protect the working VCG member signals. The combined bandwidth of the working VCG member signals and protection VCG member signals for a VCG signal is approximately equal to the provisioned bandwidth of the set of VCG member signals (i.e., equal to Bₛ).

For example, assume that an ODU1 client signal is received at source network element 110. An ODU1 signal has a bandwidth of approximately 2.5Gbps, thereby requiring 17 SDH VC-4 transport containers (each VC-4 container approximately 150Mbps) to transport the ODU1 client signal over the transport network. In this example, assume that a VCG signal having 20 VCG member signals (e.g., 20 VC-4 transport containers) is provisioned, where 17 VC-4 transport containers are working VCG member signals designated to transport the ODU1 client signal and 3 VC-4 transport containers are protection VCG member signals available to protect any of the working VCG member signals. In this example, B_{c} of the ODU1 client signal is 17 VC-4s, "fix group size" for the VCG signal provisioned for the ODU1 client signal is 17 VC-4s (i.e., 17 working VCG member signals), and Bₛ of the VCG signal provisioned for the client signal is 20 VC-4s (i.e., 20 VCG member signals including the 17 working VCG member signals and 3 protection VCG member signals).

In continuation of this example, if one of the 17 working VCG member signals fails, one of the 3 protection VCG member signals begins transporting the portion of the CBR client signal previously transported by the failed one of the 17 working VCG member signals, leaving two of the 3 protection VCG member signals available for protecting the 17 working VCG member signals. Similarly, if two of the 17 working VCG member signals fail, two of the 3 protection VCG member signals begin transporting the portion of the CBR client signal previously transported by the failed ones of the 17 working VCG member signals, leaving one of the 3 protection VCG member signals available for protecting the 17 working VCG member signals, and so on. If more than three of the 17 working VCG member signals fail, the CBR client signal fails.

The enhanced VCAT/LCAS functions of the present invention ensure that a constant VCG bandwidth is available for the CBR client signal mapping process (as long as the "fix group size" provisioned for a VCG signal can be maintained using protection VCG member signals of that VCG signal when working VCG member signals of that VCG signal fail). In other words, the enhanced VCAT/LCAS functions of the present invention provide bandwidth-efficient protection and resiliency for constant bit rate services. In one embodiment, the enhanced VCAT/LCAS functions of the present invention include enhanced VCG administration functions for managing the working VCG member signals and protection VCG member signals in a manner for maintaining available client-signal-carrying bandwidth at least equal to the bandwidth provisioned for the VCG signal (i.e., the "fix group size").

The source network element 110 and sink network element 120 perform enhanced VCG administration functions. The VCG administration functions include administration of a VCG signal. The administration of the VCG signal includes provisioning of the VCG signal (including the "fix group size" bandwidth parameter of the VCG signal, which is based on the bandwidth of the CBR client signal). The administration of the VCG signal includes administration of working VCG member signals and protection VCG member signals, including the initial provisioning of working VCG member signals and protection VCG member signals, and re-mapping of the client signal between working VCG member signals and protection VCG member signals (and vice versa) in order to maintain transport bandwidth sufficient to support the "fix group size" of the VCG signal and, therefore, to provide constant-rate service to the associated CBR client signal transported by that VCG signal.

In one embodiment, as described herein, administration of a VCG signal is performed using a pair of state machines for each VCG member signal of the VCG signal. The pair of state machines for a VCG member signal includes a state machine maintained by the source network element (denoted as a source element state machine) and a state machine maintained by the sink network element (denoted as a sink element state machine). For each VCG member signal of a VCG signal, the source element state machine and sink element state machine for that VCG member signal may communicate information regarding the current state of that VCG member signal and/or state transitions associated with that VCG member signal. The source element state machine and sink element state machine may be better understood with respect to FIG. 3.

FIG. 3 depicts a VCG member source state diagram for administration of a VCG member signal at a source network element and a VCG member sink state diagram for administration of a VCG member signal at a sink network element. Specifically, FIG. 3 depicts a modified member source state diagram 310 and a modified member sink state diagram 320. The modified member source state diagram 310 and a modified member sink state diagram 320 comprise modified versions of the member source state diagram and member sink state diagram, respectively, as defined in ITU-T G.7042 (which is incorporated herein by reference). Specifically, the member source state diagram and the member sink state diagram defined in ITU-T G.7042 have each been modified to include a SPARE state, thereby forming modified member source state diagram 310 and modified member sink state diagram 320, as depicted in FIG. 3.

The inclusion of the SPARE state in modified member source state diagram 310 and modified member sink state diagram 320 enables management of working VCG member signals and protection VCG member signals by source network element 110 and sink network element 120. The inclusion of the SPARE state in modified member source state diagram 310 and modified member sink state diagram 320 enables provisioning of "spare" VCG member signals (i.e., protection VCG member signals). The inclusion of the SPARE state in modified member source state diagram 310 and modified member sink state diagram 320 further enables switching of working VCG member signals from an "active" state to a "spare" state (from client-signal carrying signals to non-client-signal-carrying signals), and switching of protection VCG member signals from a "spare" state to an "active" state (from non-client-signal carrying signals to client-signal-carrying signals), where such switching is performed in response to the failure of one or more of the working VCG member signals.

As depicted in FIG. 3, modified member source state diagram 310 includes states of NORM, IDLE, ADD, REMOVE, DNU, and SPARE. The interaction between the NORM, IDLE, ADD, REMOVE, and DNU states is described in ITU-T G.7042. The SPARE state is a new state that is not currently defined in ITU-T G.7042. In one embodiment, interaction of new SPARE state with existing states may be implemented as depicted in FIG. 3. In one such embodiment, for example, state transitions may be added from ADD to SPARE, from NORM to SPARE and SPARE to NORM, and from DNU to SPARE and SPARE to DNU. Although specific state transitions associated with the new SPARE state of the member source state diagram are depicted and described herein with respect to FIG. 3, various other combinations of state transitions associated with the new SPARE state may be implemented in support of the enhanced VCAT/LCAS functions of the present invention, as well as various other functions.

As depicted in FIG. 3, modified member sink state diagram 320 includes states of OK, IDLE, FAIL, and SPARE. The interaction between the OK, IDLE, and FAIL states is described in ITU-T G.7042. The SPARE state is a new state that is not currently defined in ITU-T G.7042. In one embodiment, interaction of the new SPARE state with existing states may be implemented as depicted in FIG. 3. In one such embodiment, for example, state transitions may be added: (1) from OK to SPARE and SPARE to OK, and (2) from FAIL to SPARE and SPARE to FAIL. Although specific state transitions associated with the new SPARE state of the member sink state diagram are depicted and described herein with respect to FIG. 3, various other combinations of state transitions associated with the new SPARE state may be implemented in support of the enhanced VCAT/LCAS functions of the present invention, as well as various other functions.

In order to provide VCG administration in support of the enhanced VCAT/LCAS functions of the present invention, for each VCG member signal of a VCG signal, the modified member source state diagram 310 and modified member sink state diagram 320 signal each other in order to inform each other as to which VCG member signals are spare VCG member signals (non-client-signal-carrying signals) and which VCG member signals are not spare VCG member signals (client-signal-carrying signals). There are many different options with respect to signaling between modified member source state diagram 310 and modified member sink state diagram 320 for VCG member signals. In one embodiment, for example, spare VCG members may be signaled using a specific SPARE value for the LCAS control word. In one embodiment, for example, spare VCG member signals may be signaled using a previously defined value (e.g., "DNU" value) for the LCAS control word. The present invention is not limited to such embodiments.

In an embodiment in which spare VCG member signals are signaled between member source state machine and member sink state machine using a previously defined value (e.g., using the "DNU" value of the member source state machine) for the LCAS control word, change is only required in the source state machines, not in the sink state machines. This enables equipment inter-working between enhanced transport network equipment (i.e., new transport networking equipment that supports enhanced VCAT/LCAS functions of the present invention) and non-enhanced transport network equipment (i.e., existing transport networking equipment that does not support enhanced VCAT/LCAS functions of the present invention).

In the direction of transmission from enhanced transport networking equipment to non-enhanced transport networking equipment, the enhanced source state machine would provide the CBR client signal resiliency features of the present invention. In the direction of transmission from non-enhanced transport networking equipment to enhanced transport networking equipment, the non-enhanced source state machine would not provide the CBR client signal resiliency features of the present invention. This inter-working embodiment is advantageous in transport networks in which equipment inter-working between enhanced transport network equipment (i.e., enhanced in accordance with the present invention) and non-enhanced transport network equipment is expected or required.

In some embodiments, depending on the implementation of the enhanced VCAT/LCAS functions of the present invention, one or more existing parameters may be redefined or used in a different manner or for a different purpose, one or more existing parameters may be replaced with one or more new parameters, one or more existing parameters may be supplemented with one or more new parameters, and the like, as well as various combinations thereof. Similarly, for such existing parameters, one or more existing values may be redefined or used in a different manner or for a different purpose, one or more existing values may be replaced with one or more new values, one or more existing values may be supplemented with one or more new values, and the like, as well as various combinations thereof.

In one embodiment, for example, adaptation of partial loss of capacity and total loss of capacity semantics (including parameters and associated values which may be signaled between the source and sink network elements for partial loss of capacity and total loss of capacity). For example, for CBR client signals, partial loss of capacity may correspond to failure of a number of client-signal-carrying VCG member signals that is less than or equal to the number of non-client-signal-carrying VCG member signals (spare, not failed) available to protect the client-signal-carrying VCG member signals (i.e., "fix group size" can still be maintained so the CBR client signal does not fail). For example, for CBR client signals, total loss of capacity may correspond to the failure of a number of client-signal-carrying VCG member signals that is greater than the number of non-client-signal-carrying VCG member signals (spare, not failed) available to protect the client-signal-carrying VCG member signals (i.e., "fix group size" cannot be maintained so the entire CBR client signal fails).

In one embodiment, for example, service signal failure (SSF) signaling may be adapted according to the enhanced VCAT/LCAS capabilities of the present invention, e.g., based on the modifications to partial loss of capacity and total loss of capacity. For example, in existing LCAS implementations, SSF signaling is performed when the available capacity drops to zero. By contrast, in enhanced implementations according to the present invention, SSF signaling may be performed if the number of client-signal-carrying VCG member signals that fails is greater than the number of non-client-signal-carrying VCG member signals available to protect the client-signal-carrying VCG member signals (i.e., "fix group size" cannot be maintained so the entire CBR client signal fails and, therefore, SSF signaling is initiated).

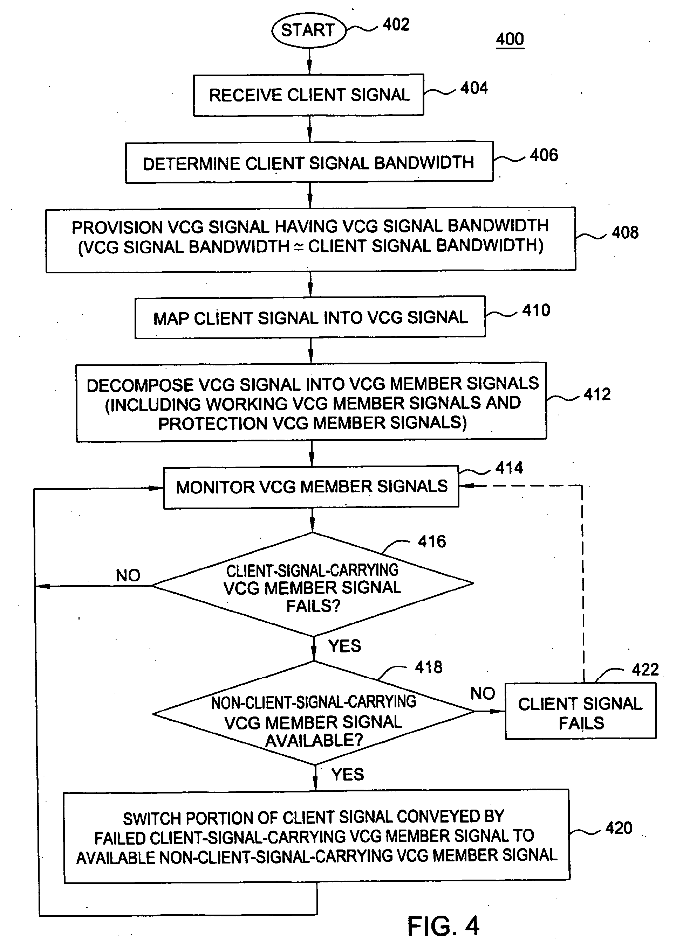

FIG. 4 depicts a method according to one embodiment of the present invention. Specifically, method 400 of FIG. 4 includes a method for provisioning a VCG signal for transporting a CBR client signal. As described herein, the VCG signal is provisioned with a VCG signal bandwidth greater than the bandwidth required to transport the CBR client signal, and the VCG signal is decomposed into working VCG member signals and protection VCG member signals, each of which is available to transport the CBR client signal. Although depicted and described as being performed serially, at least a portion of the steps of method 400 may be performed contemporaneously, or in a different order than depicted and described with respect to FIG. 4. The method 400 begins at step 402 and proceeds to step 404.

At step 404, a client signal is received. In one embodiment, the client signal is a CBR client signal (e.g., STS-N in SONET, STM-N in SDH, ODUk in OTN, and the like). At step 406, a client signal bandwidth (denoted as B_{c}) of the received client signal is determined. At step 408, a VCG signal is provisioned for the received client signal. The VCG signal is provisioned to have a VCG signal bandwidth (denoted as "fix group size"). The VCG signal bandwidth is equal to or slightly greater than the client signal bandwidth (such that there is sufficient bandwidth to transport the client signal). At step 410, the client signal is mapped into the VCG signal.

At step 412, the VCG signal is decomposed into a plurality of VCG member signals. The VCG member signals include working VCG member signals (which initially transport the client signal) and at least one protection VCG member signal (available to transport the client signal if one or more of the working VCG members signals fails). The working VCG member signals and protection VCG member signals are active VCG member signals. The working VCG member signals and protection VCG member signals have an aggregate bandwidth greater than the VCG signal bandwidth.

At step 414, the VCG member signals, including the working VCG member signals and protection VCG member signals are monitored. The VCG member signals are monitored in order to detect failures of client-signal-carrying VCG member signals (such that the corresponding portion of the client signal can be switched from the failed client-signal-carrying VCG member signal(s) to non-client-signal-carrying VCG member signals). The VCG member signals are monitored in order to detect failures of non-client-signal-carrying VCG member signals (since this impacts the determination as to whether there are enough non-client-signal-carrying VCG member signals available to transport portions of the client signal if one or more of the client-signal-carrying VCG member signals fails).

At step 416, a determination is made as to whether one (or more) of the client-signal-carrying VCG member signals fails. If a client-signal-carrying VCG member signal(s) does not fail, method 400 returns to step 414 (i.e., the client-signal-carrying VCG member signals and the non-client-signal-carrying VCG members signals continue to be monitored for failures). If a client-signal-carrying VCG member signal(s) fails, method 400 proceeds to step 418. At step 418, a determination is made as to whether a non-client-signal-carrying VCG member signal (or signals, depending on the number of failed client-signal-carrying VCG member signals requiring protection) is available to protect the failed client-signal-carrying VCG member signal(s).

With respect to step 418, if a non-client-signal-carrying VCG member signal (or signals) is available, method 400 proceeds to step 420. At step 420, the portion of the client signal conveyed by the failed client-signal-carrying VCG member signal(s) is switched to the available non-client-signal-carrying VCG member signal(s), thereby enabling the client signal to continue to be transported over the transport network at a constant rate. From step 420, method 400 returns to step 414 (i.e., the VCG member signals continue to be monitored).

With respect to step 418, if a non-client-signal-carrying VCG member signal(s) is not available (e.g., too many of the VCG member signals have failed such that not enough VCG member signals are available to transport the client signal), method 400 proceeds to step 422. At step 422, the client signal fails. From step 422, method 400 returns to step 414 (indicated by a dotted line connection to signify that, while the VCG member signals continue to be monitored, processing according to method 400 does not resume until enough VCG member signals become available to reestablish the failed client signal).

In other words, although omitted for purposes of clarity, when the client signal fails (as specified in step 422), the VCG member signals continue to be monitored in order to detect whether enough VCG member signals become available to reestablish the failed client signal. In response to determination that enough VCG member signals (which may include any combination of working VCG member signals and protection VCG member signals) become available, the client signal is restored. After the client signal is restored using VCG member signals, processing according to method 400 continues (i.e., the client signal continues to be provided from the source network element to the sink network element and VCG member signals continue to be monitored as described hereinabove).

Since the present invention is primarily depicted and described herein with respect to a generic transport network, the present invention is applicable to any transport network, such as SONET, SDH, PDH, and OTN transport networks conveying SONET, SDH, PDH, and OTN VCG signals, respectively, and the like, as well as various combinations thereof. Although primarily depicted and described herein with respect to traditional time division multiplexing (TDM)-type CBR client signals (e.g., SONET, SDH, PDH, OTN, and the like), the present invention may be advantageously employed for packet applications requiring constant data rates. For example, the present invention may be employed for storage area network signals such as enterprise systems connection (ESCON) signals, fiber connectivity (FICON) signals, and the like, as well as various combinations thereof.

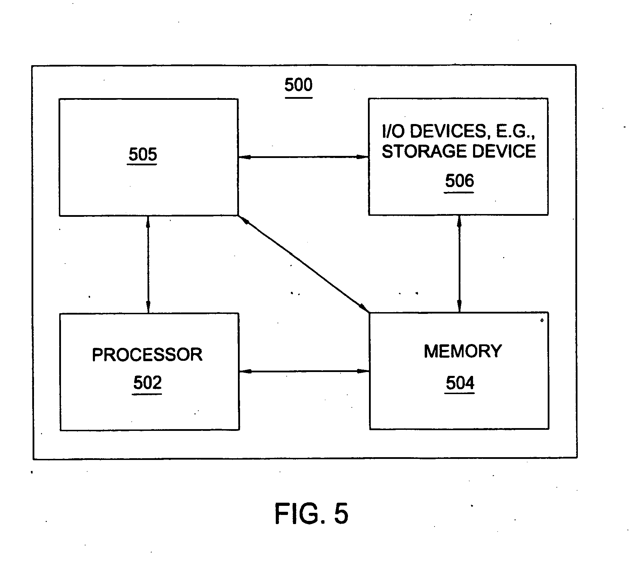

FIG. 5 depicts a high-level block diagram of a general-purpose computer suitable for use in performing the functions described herein. As depicted in FIG. 5, system 500 comprises a processor element 502 (e.g., a CPU), a memory 504, e.g., random access memory (RAM) and/or read only memory (ROM), a bandwidth management module 505, and various input/output devices 506 (e.g., storage devices, including but not limited to, a tape drive, a floppy drive, a hard disk drive or a compact disk drive, a receiver, a transmitter, a speaker, a display, an output port, and a user input device (such as a keyboard, a keypad, a mouse, and the like)).

It should be noted that the present invention may be implemented in software and/or in a combination of software and hardware, e.g., using application specific integrated circuits (ASIC), a general purpose computer or any other hardware equivalents. In one embodiment, the present bandwidth management process 505 can be loaded into memory 504 and executed by processor 502 to implement the functions as discussed above. As such, bandwidth management process 505 (including associated data structures) of the present invention can be stored on a computer readable medium or carrier, e.g., RAM memory, magnetic or optical drive or diskette and the like.

It is contemplated that some of the steps discussed herein as software methods may be implemented within hardware, for example, as circuitry that cooperates with the processor to perform various method steps. Portions of the present invention may be implemented as a computer program product wherein computer instructions, when processed by a computer, adapt the operation of the computer such that the methods and/or techniques of the present invention are invoked or otherwise provided. Instructions for invoking the inventive methods may be stored in fixed or removable media, transmitted via a data stream in a broadcast or other signal bearing medium, and/or stored within a working memory within a computing device operating according to the instructions.

Although various embodiments which incorporate the teachings of the present invention have been shown and described in detail herein, those skilled in the art can readily devise many other varied embodiments that still incorporate these teachings.

## Claims

1. A method for processing and adapting resiliency features in a constant bit rate CBR client signal for propagation over a transport network (102), comprising:
provisioning (408), for the CBR client signal, a virtual concatenation group VCG signal having a VCG signal bandwidth adapted for supporting the CBR client signal;
converting (412) the VCG signal into a set of VCG member signals having an aggregate bandwidth greater than the VCG signal bandwidth, the set of VCG member signals including a plurality of working VCG member signals (109₁ to 109_{N}) and at least one protection VCG member signal (109_{N+1} to 109_{N+M}); and
propagating the CBR client signal toward the transport network (102) using the set of VCG member signals;
wherein the working VCG member signals convey the CBR client signal and the at least one protection VCG member signal is available to protect the working VCG member signals, and, in response to a failure of one of the working VCG member signals, switching (420) a corresponding portion of the CBR client signal from the failed one of the working VCG member signals to one of the at least one protection VCG member signals, wherein the switching is performed using a pair of state machines associated with the protection VCG member signal, the pair of state machines including a first state machine on a first network element operating as a source (110, 310) of the VCG signal and a second state machine on a second network element operating as a sink (120, 320) of the VCG signal.

2. The method of claim 1, further comprising:
receiving the set of VCG member signals (109'₁ 109'_{N}) over the transport network (102);
reconstructing the VCG signal from ones of the VCG member signals conveying the CBR client signal; and
extracting (124) the CBR client signal from the reconstructed VCG signal.

3. An apparatus for processing and adapting one or more resiliency features in a constant bit rate CBR client signal for propagation over a transport network (102), comprising:
means for provisioning (112), for the CBR client signal, a virtual concatenation group VCG signal having a VCG signal bandwidth adapted for supporting the CBR client signal;
means for converting (116) the VCG signal into a set of VCG member signals having an aggregate bandwidth greater than the VCG signal bandwidth, the set of VCG member signals including a plurality of working VCG member signals (109₁ to 109_{N}) and at least one protection VCG member signal (109_{N+1} to 109_{N+M}); and
means for propagating the CBR client signal toward the transport network (102) using the set of VCG member signals;
wherein the working VCG member signals convey the CBR client signal and the at least one protection VCG member signal is available to protect the working VCG member signals, and, in response to a failure of one of the working VCG member signals, switching (420) a corresponding portion of the CBR client signal from the failed one of the working VCG member signals to one of the at least one protection VCG member signals, wherein the switching is performed using a pair of state machines (Fig. 3) associated with the protection VCG member signal, the pair of state machines including a first state machine on a first network element operating as a source (110, 310) of the VCG signal and a second state machine on a second network element operating as a sink (120, 320) of the VCG signal.

4. A method for reconstructing a virtual concatenation group VCG signal transporting a constant bit rate CBR client signal over a transport network, comprising:
receiving a set of VCG member signals associated with the VCG signal, wherein the set of VCG member signals comprises a plurality of working VCG member signals and at least one protection VCG member signal, the VCG signal having a VCG signal bandwidth adapted for supporting the CBR client signal, the set of VCG member signals having an aggregate bandwidth greater than the VCG signal bandwidth;
reconstructing the VCG signal from ones of the VCG member signals conveying the CBR client signal; and
extracting the CBR client signal from the reconstructed VCG signal;
wherein the working VCG member signals convey the CBR client signal and the at least one protection VCG member signal is available to protect the working VCG member signals, and, in response to a failure of one of the working VCG member signals, switching (420) a corresponding portion of the CBR client signal from the failed one of the working VCG member signals to one of the at least one protection VCG member signals, wherein the switching is performed using a pair of state machines (Fig. 3) associated with the protection VCG member signal, the pair of state machines including a first state machine on a first network element operating as a source (110, 310) of the VCG signal and a second state machine on a second network element operating as a sink (120, 320) of the VCG signal.

## Patentansprüche

1. Verfahren zum Verarbeiten und Anpassen von Federeigenschaften in einem Client-Signal mit konstanter Bitrate, CBR, für die Verbreitung über ein Transportnetzwerk (102), umfassend:
Bereitstellen (408), für das CBR-Client-Signal, eines Signals einer virtuellen Verknüpfungsgruppe, VCG, mit einer für die Unterstützung des CBR-Client-Signals angepassten VCG-Signalbandbreite;
Umwandeln (412) des VCG-Signals in einen Satz von VCG-Mitglieder-Signalen mit einer gesamten Bandbreite, welche größer als die VCG-Signalbandbreite ist, wobei der Satz von VCG-Mitglieder-Signalen eine Mehrzahl von VCG-Mitglieder-Nutzsignalen (109₁ bis 109_{N}) und mindestens ein VCG-Mitglieder-Schutzsignal (109_{N+1} bis 109_{N+M}) umfasst; und
Verbreiten des CBR-Client-Signals in Richtung des Transportnetzwerks (102) unter Verwendung des Satzes von VCG-Mitglieder-Signalen;
wobei die VCG-Mitglieder-Nutzsignale das CBR-Client-Signal befördern und das mindestens eine VCG-Mitglieder-Schutzsignal verfügbar ist, um die VCG-Mitglieder-Nutzsignale zu schützen, und, in Reaktion auf einen Fehler eines der VCG-Mitglieder-Nutzsignale, Aufschalten (420) eines entsprechenden Abschnitts des CBR-Client-Signals von demjenigen der VCG-Mitglieder-Nutzsignale, welches einen Fehler aufweist, auf das oder eines der VCG-Mitglieder-Schutzsignal(e), wobei das Aufschalten unter Verwendung eines Paars von mit dem VCG-Mitglieder-Schutzsignal assoziierten Zustandsmaschinen erfolgt, wobei das Zustandsmaschinen-Paar eine erste Zustandsmaschine auf einem ersten Netzwerkelement, welche als Quelle (110, 310) des VCG-Signals fungiert, und eine zweite Zustandsmaschine auf einem zweiten Netzwerkelement, welche als Senke (120, 320) des VCG-Signals fungiert, umfasst.

2. Das Verfahren nach Anspruch 1, weiterhin umfassend:
Empfangen des Satzes von VCG-Mitglieder-Signalen (109'₁ 109'_{N}) über das Transportnetzwerk (102);
Wiederherstellen des VCG-Signals aus denjenigen der VCG-Mitglieder-Signale, welche das CBR-Client-Signal befördern; und
Extrahieren (124) des CBR-Client-Signals aus dem wiederhergestellten VCG-Signal.

3. Vorrichtung für die Verarbeitung und Anpassung einer oder mehrerer Federeigenschaft(en) in einem Client-Signal mit konstanter Bitrate, CBR, für die Verbreitung über ein Transportnetzwerk (102), umfassend:
Mittel zum Bereitstellen (112), für das CBR-Client-Signal, eines Signals einer virtuellen Verknüpfungsgruppe, VCG, mit einer für die Unterstützung des CBR-Client-Signals angepassten VCG-Signalbandbreite;
Mittel zum Umwandeln (116) des VCG-Signals in einen Satz von VCG-Mitglieder-Signalen mit einer gesamten Bandbreite, welche größer als die VCG-Signalbandbreite ist, wobei der Satz von VCG-Mitglieder-Signalen eine Mehrzahl von VCG-Mitglieder-Nutzsignalen (109₁ bis 109_{N}) und mindestens ein VCG-Mitglieder-Schutzsignal (109_{N+1} bis 109_{N+M}) umfasst; und
Mittel zum Verbreiten des CBR-Client-Signals in Richtung des Transportnetzwerks (102) unter Verwendung des Satzes von VCG-Mitglieder-Signalen;
wobei die VCG-Mitglieder-Nutzsignale das CBR-Client-Signal befördern und das mindestens eine VCG-Mitglieder-Schutzsignal verfügbar ist, um die VCG-Mitglieder-Nutzsignale zu schützen, und, in Reaktion auf einen Fehler eines der VCG-Mitglieder-Nutzsignale, Aufschalten (420) eines entsprechenden Abschnitts des CBR-Client-Signals von demjenigen der VCG-Mitglieder-Nutzsignale, welches einen Fehler aufweist, auf das oder eines der VCG-Mitglieder-Schutzsignal(e), wobei das Aufschalten unter Verwendung eines Paars von mit dem VCG-Mitglieder-Schutzsignal assoziierten Zustandsmaschinen (Fig. 3) erfolgt, wobei das Zustandsmaschinen-Paar eine erste Zustandsmaschine auf einem ersten Netzwerkelement, welche als Quelle (110, 310) des VCG-Signals fungiert, und eine zweite Zustandsmaschine auf einem zweiten Netzwerkelement, welche als Senke (120, 320) des VCG-Signals fungiert, umfasst.

4. Verfahren zum Wiederherstellen eines Signals einer virtuellen Verknüpfungsgruppe, VCG, welches ein Client-Signal mit konstanter Bitrate, CBR, über ein Transportnetzwerk transportiert, umfassend:
Empfangen eines Satzes von mit dem VCG-Signal assoziierten VCG-Mitglieder-Signalen, wobei der Satz von VCG-Mitglieder-Signalen eine Mehrzahl von VCG-Mitglieder-Nutzsignalen und mindestens ein VCG-Mitglieder-Schutzsignal umfasst, wobei das VCG-Signal eine für die Unterstützung des CBR-Client-Signals angepasste VCG-Signalbandbreite aufweist, wobei der Satz von VCG-Mitglieder-Signalen eine Gesamtbandbreite aufweist, welche größer ist als die VCG-Signalbandbreite;
Wiederherstellen des VCG-Signals aus denjenigen der VCG-Mitglieder-Signale, welche das CBR-Client-Signal befördern; und
Extrahieren des CBR-Client-Signals aus dem wiederhergestellten VCG-Signal;
wobei die VCG-Mitglieder-Nutzsignale das CBR-Client-Signal befördern und das mindestens eine VCG-Mitglieder-Schutzsignal verfügbar ist, um die VCG-Mitglieder-Nutzsignale zu schützen, und, in Reaktion auf einen Fehler eines der VCG-Mitglieder-Nutzsignale, Aufschalten (420) eines entsprechenden Abschnitts des CBR-Client-Signals von demjenigen der VCG-Mitglieder-Nutzsignale, welches einen Fehler aufweist, auf das oder eines der VCG-Mitglieder-Schutzsignal(e), wobei das Aufschalten unter Verwendung eines Paars von mit dem VCG-Mitglieder-Schutzsignal assoziierten Zustandsmaschinen (Fig. 3) erfolgt, wobei das Zustandsmaschinen-Paar eine erste Zustandsmaschine auf einem ersten Netzwerkelement, welche als Quelle (110, 310) des VCG-Signals fungiert, und eine zweite Zustandsmaschine auf einem zweiten Netzwerkelement, welche als Senke (120, 320) des VCG-Signals fungiert, umfasst.

## Revendications

1. Procédé de traitement et d'adaptation des caractéristiques de résilience dans un signal client à débit binaire constant, CBR, en vue de sa propagation sur un réseau de transport (102), comprenant :
Fourniture (408), pour le signal client CBR, d'un signal de groupe de concaténation virtuel, VCG, dont la largeur de bande de signal VCG est adaptée pour prendre en charge le signal client CBR ;
Conversion (412) du signal VCG en un ensemble de signaux membres VCG dont la largeur de bande combinée est supérieure à la largeur de bande du signal VCG, l'ensemble de signaux membres VCG incluant une pluralité de signaux membres VCG de travail (109₁ à 109_{N}) et au moins un signal membre VCG de protection (109_{N+1} à 109_{N+M}) ; et
Propagation du signal client CBR vers le réseau de transport (102) en utilisant l'ensemble de signaux membres VCG ;
dans lequel les signaux membres VCG de travail transportent le signal client CBR et l'au moins un signal membre VCG de protection est disponible pour protéger les signaux membres VCG de travail et, en réponse à une défaillance de l'un des signaux membres VCG de travail, commutation (420) d'une portion correspondante du signal client CBR de celui des signaux membres VCG de travail qui est défaillant vers l'au moins un signal membre VCG de protection, dans lequel la commutation est réalisée en utilisant une paire de machines d'état associée au signal membre VCG de protection, la paire de machines d'état incluant une première machine d'état sur un premier élément de réseau faisant office de source (110, 310) du signal VCG et une deuxième machine d'état sur un deuxième élément de réseau faisant office de collecteur (120, 320) du signal VCG.

2. Procédé selon la revendication 1, comprenant en outre :
Réception de l'ensemble de signaux membres VCG (109'ᵢ 109'_{N}) sur le réseau de transport (102) ;
Reconstruction du signal VCG à partir de l'un des signaux membres VCG transportant le signal client CBR ; et
Extraction (124) du signal client CBR du signal VCG reconstruit.

3. Appareil de traitement et d'adaptation d'une ou plusieurs caractéristiques de résilience dans un signal client à débit binaire constant, CBR, en vue de sa propagation sur un réseau de transport (102), comprenant :
moyens pour fournir (112), pour le signal client CBR, un signal de groupe de concaténation virtuel, VCG, dont la largeur de bande de signal VCG est adaptée pour prendre en charge le signal client CBR ;
moyens pour convertir (116) le signal VCG en un ensemble de signaux membres VCG dont la largeur de bande combinée est supérieure à la largeur de bande du signal VCG, l'ensemble de signaux membres VCG incluant une pluralité de signaux membres VCG de travail (109, à 109_{N}) et au moins un signal membre VCG de protection (109_{N+1} à 109_{N+M}) ; et
moyens pour propager le signal client CBR vers le réseau de transport (102) en utilisant l'ensemble de signaux membres VCG ;
dans lequel les signaux membres VCG de travail transportent le signal client CBR et l'au moins un signal membre VCG de protection est disponible pour protéger les signaux membres VCG de travail et, en réponse à une défaillance de l'un des signaux membres VCG de travail, commutation (420) d'une portion correspondante du signal client CBR de celui des signaux membres VCG de travail qui est défaillant vers l'au moins un signal membre VCG de protection, dans lequel la commutation est réalisée en utilisant une paire de machines d'état (Fig. 3) associée au signal membre VCG de protection, la paire de machines d'état incluant une première machine d'état sur un premier élément de réseau faisant office de source (110, 310) du signal VCG et une deuxième machine d'état sur un deuxième élément de réseau faisant office de collecteur (120, 320) du signal VCG.

4. Procédé de reconstruction d'un signal de groupe de concaténation virtuel, VCG, transportant un signal client à débit binaire constant, CBR, sur un réseau de transport, comprenant :
Réception d'un ensemble de signaux membres VCG associé au signal VCG, dans lequel l'ensemble de signaux membres VCG comprend une pluralité de signaux membres VCG de travail et au moins un signal membre VCG de protection, le signal VCG ayant une largeur de bande de signal VCG adaptée pour prendre en charge le signal client CBR, l'ensemble de signaux membres VCG ayant une largeur de bande combinée supérieure à la largeur de bande du signal VCG ;
Reconstruction du signal VCG à partir de l'un des signaux membres VCG transportant le signal client CBR ; et
Extraction du signal client CBR du signal VCG reconstruit ;
dans lequel les signaux membres VCG de travail transportent le signal client CBR et l'au moins un signal membre VCG de protection est disponible pour protéger les signaux membres VCG de travail et, en réponse à une défaillance de l'un des signaux membres VCG de travail, commutation (420) d'une portion correspondante du signal client CBR de celui des signaux membres VCG de travail qui est défaillant vers l'au moins un signal membre VCG de protection, dans lequel la commutation est réalisée en utilisant une paire de machines d'état (Fig. 3) associée au signal membre VCG de protection, la paire de machines d'état incluant une première machine d'état sur un premier élément de réseau faisant office de source (110, 310) du signal VCG et une deuxième machine d'état sur un deuxième élément de réseau faisant office de collecteur (120, 320) du signal VCG.
